# FASCICULE DE BREVET EUROPEEN

(11) **EP 3 431 933 B1**
(45) Date de publication et mention de la délivrance du brevet: **15.12.2021**
(21) Numéro de dépôt: 18184320.2
(22) Date de dépôt: 18.07.2018
(51) Int. Cl.: G01D 5/244, G01D 5/245

(54) **MONTAGE SUR UN ORGANE D'UN SYSTÈME DE DÉTERMINATION DE LA POSITION DUDIT ORGANE**
MONTAGE AUF EINEM ORGAN EINES SYSTEMS ZUR BESTIMMUNG DER POSITION DIESES ORGANS
ASSEMBLY ON A MEMBER OF A SYSTEM FOR DETERMINING THE POSITION OF SAID MEMBER

(30) Priorité: 18.07.2017 FR 1756826
(43) Date de publication de la demande: 23.01.2019
(73) Titulaire: NTN-SNR Roulements, 74000 Annecy (FR)
(72) Inventeur: DURET, Christophe, 74290 BLUFFY (FR)
(74) Mandataire: Sayettat, Julien Christian

(56) Documents cités:
- EP-A1- 2 966 414
- WO-A1-02/16881
- DE-A1- 19 818 799

## Description

L'invention concerne un montage sur un organe d'un système de détermination de la position dudit organe.

Pour déterminer la position d'un organe, on connait un système comprenant :
- un codeur destiné à être solidarisé audit organe, ledit codeur comprenant une piste magnétique principale et une piste magnétique secondaire qui sont aptes chacune à émettre un signal magnétique périodique représentatif du déplacement dudit codeur ; et
- un capteur présentant deux motifs d'éléments sensibles qui sont aptes à détecter les signaux délivrés par les pistes du codeur, chaque motif étant disposé à distance de lecture d'une piste pour former un signal représentatif de la position de ladite piste, ledit capteur comprenant en outre un dispositif de traitement des signaux issus des motifs pour déterminer la position de l'organe.

En particulier :
- le document EP-1 353 151 prévoit que la piste secondaire comprenne un nombre de pôles magnétiques qui est différent de celui de la piste principale, de sorte à pouvoir déterminer simplement la position selon le principe du vernier, notamment une position absolue, c'est-à-dire par rapport à une position de référence ;
- le document EP-2 966 414 prévoit de disposer les motifs suivant une surface de lecture et d'utiliser un dispositif de traitement des signaux pour déterminer la position angulaire absolue de l'organe tournant, chaque élément sensible des motifs présentant au moins une couche sensible à base d'un matériau magnétorésistif dont la résistance varie en fonction du signal magnétique de la piste à détecter, chaque motif étant disposé de sorte que ladite couche sensible s'étende dans un plan général qui est perpendiculaire à la surface de lecture de ladite piste.

Le document DE-198 18 799 décrit un dispositif comprenant une tige de mesure magnétique et un capteur, la tige présentant au moins deux anneaux coaxiaux codés magnétiquement qui comprennent chacun un nombre de pôles magnétiques détectés par des éléments sensibles magnétorésistifs correspondants du capteur, afin de fournir des signaux de champ magnétique corrélés, avec des signaux provenant d'un troisième élément sensible à effet Hall pour les pôles magnétiques autour d'une autre moitié de l'un des anneaux.

Le document WO-02/16881 décrit un procédé de correction numérique des mesures de position angulaire effectuées par deux roues de codage, afin de corriger rétrospectivement les erreurs d'assemblage et/ou de production, notamment par enregistrement au moyen d'un capteur de référence des valeurs d'erreurs concernées durant une étape initiale de calibration, puis par filtrage par analyse de Fourier.

Ce type de systèmes de détermination présente l'avantage de prévoir un seul capteur pour lire chacune des pistes et pour traiter les signaux correspondants, chaque motif étant agencé pour pouvoir être disposé suivant une surface qui s'étend à distance de lecture de la piste à détecter.

En particulier, pour que chacun des motifs d'éléments sensibles détecte un niveau de signal magnétique comparable, lesdits motifs peuvent être disposés suivant une même surface de lecture qui s'étend à une distance de lecture sensiblement constante par rapport aux pistes magnétiques multipolaires.

Ce type de système de détermination trouve plus particulièrement son application pour le contrôle des moteurs électriques synchrones (à aimant permanent ou à rotor bobiné), notamment pour véhicules électriques, qui ont besoin d'une mesure précise de la position du rotor afin de gérer l'alimentation des bobines du stator. En variante, le système peut déterminer une position linéaire d'un organe en translation.

La précision requise est classiquement de l'ordre de ±1° électrique, c'est-à-dire sur une paire de pôles du moteur. En particulier, un contrôle efficace du moteur signifie :
- un meilleur rendement et permet:
   ∘ de dimensionner le moteur au plus juste, c'est-à-dire de gagner de la masse et de l'encombrement ;
   ∘ d'économiser de l'énergie et donc de diminuer la quantité de batteries (masse, coût) pour la même autonomie ou d'augmenter l'autonomie pour la même quantité de batteries ;
   ∘ un échauffement moindre car il y a moins de pertes par effet Joule.
- de meilleures performances ressenties de l'utilisateur : pas de saut de couple, de démarrage dans le mauvais sens, moins de bruit acoustique émis.

Notamment dans ce type d'application, la sûreté de fonctionnement du contrôle du moteur électrique est un besoin de plus en plus présent. En effet, la détermination angulaire est utilisée directement dans la boucle de régulation du couple du moteur : une information d'angle erronée pourrait conduire à une alimentation électrique du moteur erronée et donc à un déplacement intempestif, potentiellement grave dans le cas d'un véhicule électrique.

La norme de sûreté de fonctionnement ISO26262 définit ces évènements redoutés et classe les systèmes et leurs composants selon des niveaux ASIL (pour Automotive Safety Integrity Level en anglais) de D à A, du plus sécuritaire au moins sécuritaire.

Un capteur de niveau D doit assurer une fonction sûre mais aussi sa panne doit être immédiatement diagnosticable pour que le système l'utilisant se mette en sécurité, par exemple en fonctionnant temporairement en mode dégradé.

L'invention a pour but de résoudre les problèmes de l'art antérieur en proposant notamment un montage d'un système de détermination dont la fiabilité est améliorée, en particulier relativement à la probabilité d'un défaillance complète du capteur et par conséquent au diagnostic d'une éventuelle défaillance partielle.

A cet effet, l'invention propose un montage sur un organe d'un système de détermination de la position dudit organe selon la revendication 1.

D'autres objets et avantages de l'invention apparaîtront dans la description qui suit, faite en référence aux figures annexées, dans lesquelles :
- les figures 1a à 1c sont des représentations schématiques d'un montage radial d'un capteur par rapport à un codeur selon l'invention, respectivement en perspective (figure 1a), vue de côté (figure 1b) et vue de face (figure 1c) ;
- les figures 2a et 2b sont des représentations schématiques d'un montage facial d'un capteur par rapport à un codeur selon l'invention, respectivement en perspective (figure 2a) et vue de face (figure 2b).

En relation avec ces figures, on décrit ci-dessous le montage sur un organe d'un système de détermination de sa position. Dans un exemple d'application, l'organe est tournant, par exemple en étant un arbre d'un moteur électrique synchrone, et la détermination de la position angulaire est utilisée pour piloter ledit moteur. En variante, le système peut déterminer une position linéaire d'un organe en translation.

En particulier, la position peut être déterminée de façon absolue, c'est-à-dire par rapport à une position de référence, et immédiatement à la mise sous tension du système, sans nécessiter un déplacement minimal de l'organe. Pour ce faire, le système de détermination comprend un codeur 1 qui est solidaire de l'organe, ledit codeur comprenant une piste magnétique principale 2 et une piste magnétique secondaire 3.

En particulier, les pistes magnétiques 2, 3 sont multipolaires, c'est-à-dire qu'elles présentent chacune une succession alternée de paires de pôles Nord et Sud qui s'étend selon la direction de déplacement de l'organe. Ainsi, chacune des pistes 2, 3 est apte à émettre un signal magnétique périodique représentatif du déplacement du codeur 1, notamment un signal de forme pseudo-sinusoïdal.

Dans les modes de réalisation représentés, le codeur 1 est formé d'un aimant sur lequel les pistes magnétiques multipolaires 2, 3 sont réalisées. En particulier, l'aimant peut être formé d'une matrice annulaire, par exemple réalisée à base d'un matériau plastique ou élastomère, dans laquelle sont dispersées des particules magnétiques, notamment des particules de ferrite ou de terres rares comme le NdFeB. En variante, chaque piste 2, 3 peut être formée sur un aimant distinct.

Le système de détermination comprend un capteur 4 présentant deux motifs 5 d'éléments sensibles qui sont aptes à détecter les signaux délivrés par les pistes 2, 3 du codeur 1. En particulier, chaque motif 5 peut comprendre au moins deux éléments sensibles, notamment une pluralité d'éléments sensibles alignés tel que décrit dans les documents FR-2 792 403, EP-2 602 593 ou EP-2 602 594.

Ainsi, en disposant les motifs 5 respectivement à distance de lecture d'une piste 2, 3, il est possible de former un signal représentatif de la position de ladite piste. Par ailleurs, le capteur 4 comprend un dispositif 6 de traitement des signaux issus des motifs 5 pour déterminer la position de l'organe.

La piste secondaire 3 comprend un nombre de paires de pôles magnétiques qui est différent de celui de la piste principale 2, notamment en prévoyant de faire coïncider les pôles aux points de début et de fin desdites pistes, tout en ayant un décalage desdits pôles le long desdites pistes.

En particulier, pour une mesure absolue, la piste secondaire 3 comprend un nombre de paires de pôles magnétiques qui n'a pas de diviseur commun avec celui de la piste principale 2. Selon une réalisation, les pistes 2, 3 s'étendent sur 360° pour déterminer la position angulaire sur un tour. En variante, les pistes 2, 3 s'étendent sur une portion 1/Q du tour pour pouvoir déterminer la position angulaire sur cette portion, le codeur 1 présentant alors notamment une succession de Q pistes 2, 3 sur un tour.

Selon une réalisation non revendiquée, la piste principale 2 comprend une succession de M paires de pôles et la piste secondaire 3 comprend une succession de M-1 paires de pôles.

Dans cette réalisation, comme notamment enseigné par le document EP-1 353 151, le dispositif 6 de traitement peut utiliser le principe du vernier magnétique pour déterminer la position angulaire absolue par comparaison des signaux de position angulaire issus de chacun des motifs 5.

Selon une autre réalisation enseignée par le document EP-2 372 313, chaque motif 5 permet de former un signal qui comprend la phase de la position angulaire d'une piste 2, 3, le dispositif 6 de traitement calculant une différence entre lesdites phases pour en déduire la position angulaire absolue du codeur 1.

Les éléments sensibles d'un premier motif 5 sont à base d'un matériau magnétorésistif dont la résistance varie en fonction du signal magnétique de la piste 2, 3 à détecter. En variante, les éléments sensibles du premier motif 5 sont à base d'une sonde à effet Hall.

Selon une réalisation, chacun des éléments sensibles du premier motif 5 comprend au moins une couche sensible à base d'un matériau magnétorésistif, notamment à effet tunnel, dont la résistance varie en fonction du signal magnétique de la piste 2, 3 à détecter.

En particulier, comme décrit par exemple dans le document WO-2004/083881, chaque élément sensible du premier motif 5 comprend un empilement d'une couche magnétique de référence, d'une couche de séparation et d'une couche magnétique sensible au champ à détecter, la résistance entre les couches magnétiques étant fonction de l'orientation relative de leur aimantation.

Dans cette réalisation, la couche de séparation peut être isolante pour former un élément magnétorésistif de type TMR. En variante, la couche de séparation peut être conductrice pour former un élément magnétorésistif de type GMR.

Les éléments sensibles du deuxième motif 5 sont de nature différente quant à la technologie de détection du signal magnétique délivré par la piste 3, 2 à détecter. Ainsi, du fait de l'utilisation de deux technologies différentes, une même cause de défaillance aura moins de chance de provoquer la défaillance simultanée des deux motifs 5, qui est plus difficile à diagnostiquer qu'une défaillance d'un seul des deux motifs 5. Il en résulte donc un niveau de sûreté de fonctionnement du capteur 4 qui est amélioré.

Les éléments sensibles du deuxième motif 5 sont à base d'un matériau magnétorésistif anisotropique, c.à.d. de type AMR.

Pour former le signal représentatif de la position de la piste 2, 3, chaque motif 5 est disposé suivant une surface de lecture S qui s'étend à distance de lecture L d'une piste 2, 3. En particulier, la surface de lecture S s'étend par rapport à la piste 2, 3 suivant une distance de lecture L qui est sensiblement constante afin que chaque élément sensible des motifs 5 puisse détecter un signal magnétique dont l'amplitude est sensiblement constante.

En outre, les motifs 5 peuvent être disposés suivant une même surface de lecture S, notamment afin que les pistes magnétiques 2, 3 s'étendent à une même distance de lecture L desdits motifs. Ainsi, les motifs 5 peuvent détecter des signaux magnétiques sensiblement de même amplitude, ce qui simplifie la détermination de la position absolue par comparaison desdits signaux.

Chaque motif 5 est disposé de sorte que les éléments sensibles s'étendent dans un plan général P qui est perpendiculaire à la surface de lecture S de la piste 2, 3. Ainsi, la disposition des éléments sensibles par rapport aux pistes 2, 3 permet de détecter le champ magnétique tournant qui est émis perpendiculairement auxdites pistes, ladite détection étant moins sensible à la valeur et aux dispersions de distance de lecture L que la détection du champ magnétique qui est émis par les pistes 2, 3 suivant la surface de lecture S.

De façon avantageuse, les motifs 5 présentent une longueur qui s'étend le long de la piste magnétique 2, 3 afin que le champ magnétique tournant puisse être détecté suivant ladite longueur. Par ailleurs, les pistes 2, 3 présentent une géométrie annulaire concentrique par rapport à l'axe de rotation de l'organe tournant.

Dans les modes de réalisation représentés, le capteur 4 comprend une carte électronique 8 sur laquelle le dispositif de traitement 6 est implanté. En particulier, la carte 8 présente deux faces 8a, 8b sur lesquelles respectivement un motif 5 est disposé. De façon avantageuse, les éléments sensibles s'étendent parallèlement aux faces 8a, 8b sur lesquelles ils sont disposés, ce qui simplifie l'intégration du capteur 4, notamment dans un boîtier en forme de tube de petit diamètre, pour sa fixation par rapport au codeur 1.

La configuration des deux pistes 2, 3 (notamment relativement à leur longueur polaire et à leur écartement), des deux motifs 5 (notamment relativement à leur écartement) et de leur positionnement relatif est dimensionnée pour éviter entre autres l'interférence d'une piste 2 sur l'autre 3 lors de la mesure.

En particulier, on peut écarter axialement ou radialement les deux motifs 5 en les plaçant de part et d'autre d'une carte électronique 8 dont l'épaisseur détermine cet écartement. Eventuellement, on peut accroître cet écartement en plaçant les motifs 5 sur un ou plusieurs circuits imprimés supplémentaires d'épaisseur choisie et en empilant le tout axialement ou radialement.

En outre, pour améliorer encore la sûreté de fonctionnement du capteur 4, les motifs 5 peuvent être séparés électriquement, de sorte qu'une défaillance électrique de l'alimentation de l'un d'eux ou une décharge électrostatique sur le circuit de l'un d'eux n'entraîne pas nécessairement une défaillance de l'autre.

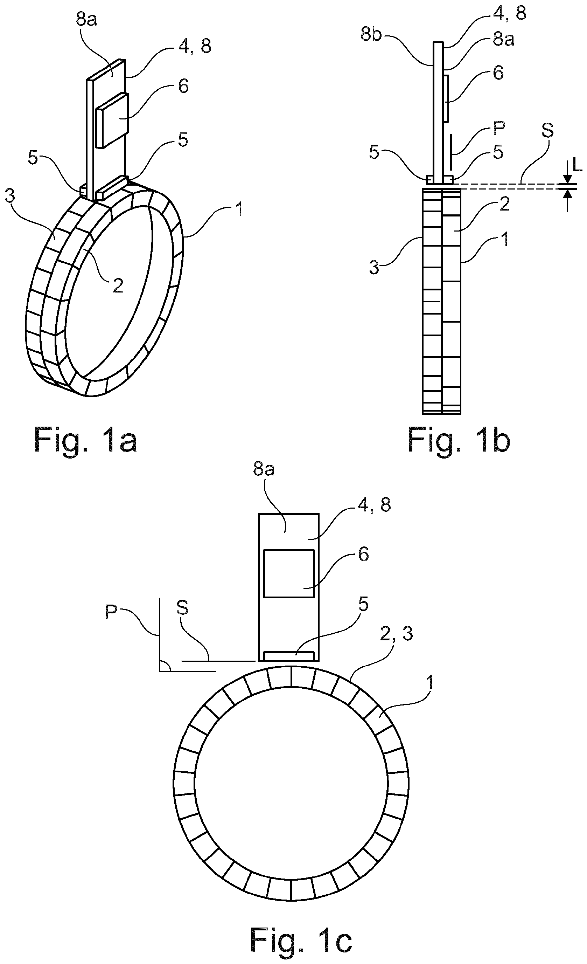

En relation avec les figures 1, les pistes magnétiques multipolaires 2, 3 sont formées le long de la périphérie extérieure de la géométrie annulaire de l'aimant, notamment en étant adjacentes et alignées axialement. La surface de lecture S s'étend circonférentiellement autour de la périphérie en délimitant une distance de lecture L sensiblement constante entre ladite surface et les pistes 2, 3.

Sur la figure 1c, la surface de lecture S est approximée au plan tangent à la périphérie au niveau du motif 5, la distance de lecture L demeurant sensiblement constante le long du motif 5 qui s'étend linéairement le long dudit plan.

La carte électronique 8 est positionnée radialement entre les pistes 2, 3 avec chaque motif 5 disposé de part et d'autre axialement pour être à distance de lecture radiale d'une piste 2, 3. Chaque motif 5 est disposé de sorte que les éléments sensibles présentent une hauteur qui s'étend radialement pour permettre une détection radiale du champ magnétique tournant.

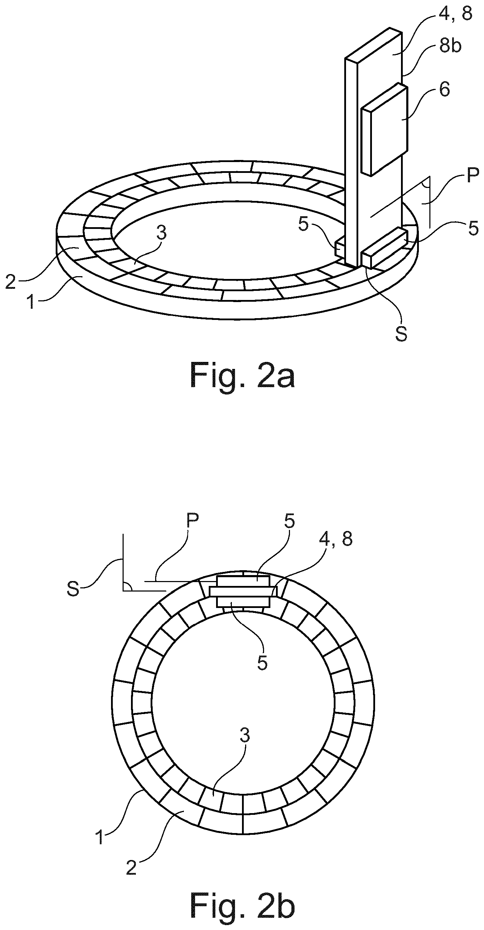

En relation avec les figures 2, les pistes magnétiques multipolaires 2, 3 sont formées sur une paroi latérale de la géométrie annulaire de l'aimant, notamment en étant adjacentes et alignées radialement. La surface de lecture S s'étend suivant un plan parallèlement à la paroi en délimitant une distance de lecture L sensiblement constante entre ladite surface et les pistes 2, 3.

La carte électronique 8 est positionnée axialement entre les pistes 2, 3 avec chaque motif 5 disposé de part et d'autre radialement pour être à distance de lecture axiale d'une piste 2, 3. Chaque motif 5 est disposé de sorte que les éléments sensibles présentent une hauteur qui s'étend axialement pour permettre une détection axiale du champ magnétique tournant.

Les éléments sensibles du premier motif 5 sont à base d'un matériau magnétorésistif, par exemple à effet tunnel, c.à.d. TMR, les éléments sensibles du deuxième motif 5 étant à base d'un matériau magnétorésistif anisotropique, c.à.d. de type AMR.

Une particularité d'un motif AMR est de doubler la fréquence du signal magnétique mesuré. Ainsi, comme représenté sur les figures, pour que le principe du vernier fonctionne sur un tour, on prévoit que le premier motif 5 soit disposé à distance de lecture d'une piste secondaire 3 présentant 2N-1 paires de pôles magnétiques, le deuxième motif 5 étant disposé à distance de lecture d'une piste principale 2 présentant N paires de pôles magnétiques.

Ainsi, on obtient bien un signal électrique de type M/M-1 tel que décrit ci-dessus pour déterminer la position absolue. Dans un exemple de réalisation, la piste principale 2 présente 16 paires de pôles, la piste secondaire 3 en ayant 31.

En outre, cette configuration 2N-1/N permet de bénéficier de pôles plus grands en regard des motifs AMR, ce qui compense leur moins grande sensibilité par rapport aux motifs TMR. Ainsi, une disposition de chacun des motifs 5 à une même distance de lecture L est possible pour pouvoir déterminer la position absolue.

## Revendications

1. Montage sur un organe d'un système de détermination de la position dudit organe, ledit montage comprenant :
- ledit organe ;
- ledit système de détermination de la position dudit organe, ledit système comprenant :
o un codeur (1) solidarisé en rotation audit organe, ledit codeur comprenant une piste magnétique principale (2) et une piste magnétique secondaire (3) qui sont aptes chacune à émettre un signal magnétique périodique représentatif du déplacement dudit codeur ; et
∘ un capteur (4) présentant deux motifs (5) d'éléments sensibles qui sont aptes à détecter les signaux délivrés par les pistes (2, 3) du codeur (1), chaque motif (5) étant disposé à distance de lecture d'une piste (2, 3) pour former un signal représentatif de la position de ladite piste, ledit capteur comprenant en outre un dispositif (6) de traitement des signaux issus des motifs (5) pour déterminer la position de l'organe ;
ledit montage étant **caractérisé en ce que** les éléments sensibles du premier motif (5) sont à base d'une sonde à effet Hall ou d'un matériau magnétorésistif dont la résistance varie en fonction du signal magnétique de la piste (2, 3) à détecter, ledit matériau étant de nature différente de celle des éléments sensibles du deuxième motif (5) quant à la technologie de détection du signal magnétique délivré par la piste (3, 2) à détecter, ledit premier motif étant disposé à distance de lecture d'une piste secondaire (3) présentant 2N-1 paires de pôles magnétiques, les éléments sensibles du deuxième motif (5) étant à base d'un matériau magnétorésistif anisotropique, ledit deuxième motif étant disposé à distance de lecture d'une piste principale (2) présentant N paires de pôles magnétiques.

2. Montage selon la revendication 1, **caractérisé en ce que** les éléments sensibles du deuxième motif (5) sont à base d'un matériau magnétorésistif de type AMR.

3. Montage selon l'une des revendications 1 ou 2, **caractérisé en ce que** les éléments sensibles du premier motif (5) sont à base d'un matériau magnétorésistif à effet tunnel ou GMR, ou d'une sonde à effet Hall.

4. Montage selon la revendication 3, **caractérisé en ce que** les éléments sensibles du premier motif (5) comprennent un empilement d'une couche magnétique de référence, d'une couche de séparation et d'une couche sensible, la résistance entre les couches magnétiques étant fonction de l'orientation relative de leur aimantation.

5. Montage selon l'une quelconque des revendications 1 à 4, **caractérisé en ce que** le codeur (1) est formé d'un aimant sur lequel les pistes magnétiques (2, 3) sont réalisées.

6. Montage selon l'une quelconque des revendications 1 à 5, **caractérisé en ce que** les pistes (2, 3) s'étendent sur 360° ou sur une portion d'un tour pour déterminer la position angulaire sur le tour ou sur ladite portion.

7. Montage selon l'une quelconque des revendications 1 à 6, **caractérisé en ce que** le capteur (4) comprend une carte électronique (8) présentant deux faces (8a, 8b) sur lesquelles respectivement un motif (5) est disposé.

8. Montage selon l'une quelconque des revendications 1 à 7, **caractérisé en ce que** chaque motif (5) est disposé de sorte que les éléments sensibles s'étendent dans un plan général (P) qui est perpendiculaire à une surface de lecture (S) de la piste (2, 3) à détecter.

## Patentansprüche

1. Montage auf einem Organ eines Systems zur Bestimmung der Position des Organs, wobei die Montage Folgendes umfasst:
- das Organ;
- das System zur Bestimmung der Position des Organs, wobei das System Folgendes umfasst:
° einen Geber (1), der drehfest mit dem Organ verbunden ist, wobei der Geber eine Hauptmagnetspur (2) und eine Sekundärmagnetspur (3) umfasst, die imstande sind, jeweils ein für die Bewegung des Gebers repräsentatives periodisches Magnetsignal auszugeben; und
° einen Sensor (4), der zwei Muster (5) aus empfindlichen Elementen aufweist, die imstande sind, die Signale zu erkennen, die von den Spuren (2, 3) des Gebers (1) abgegeben werden, wobei jedes Muster (5) auf Leseabstand einer Spur (2, 3) angeordnet ist, um ein repräsentatives Signal für die Position der Spur zu bilden, wobei der Sensor weiter eine Vorrichtung (6) zur Verarbeitung der aus den Mustern (5) stammenden Signale umfasst, um die Position des Organs zu bestimmen;
wobei die Montage **dadurch gekennzeichnet ist, dass** die empfindlichen Elemente des ersten Musters (5) auf Grundlage einer Halleffektsonde oder eines magnetoresistiven Werkstoffs sind, deren Widerstand in Abhängigkeit von dem Magnetsignal der zu erkennenden Spur (2, 3) variiert, wobei der Werkstoff von einer anderen Art als jener der empfindlichen Elemente des zweiten Musters (5) hinsichtlich der Erkennungstechnologie des Magnetsignals ist, das von der zu erkennenden Spur (3, 2) geliefert wird, wobei das erste Muster auf Leseabstand zu einer Sekundärspur (3) angeordnet ist, die 2N-1 Paare an Magnetpolen aufweist, wobei die empfindlichen Elemente des zweiten Musters (5) auf Grundlage eines anisotropen magnetoresistiven Werkstoffs sind, wobei das zweite Muster, das auf Leseabstand zu einer Hauptspur (2) angeordnet ist, N Paare an Magnetpolen aufweist.

2. Montage nach Anspruch 1, **dadurch gekennzeichnet, dass** die empfindlichen Elemente des zweiten Musters (5) auf Grundlage eines magnetoresistiven Werkstoffs in der Art AMR sind.

3. Montage nach einem der Ansprüche 1 oder 2, **dadurch gekennzeichnet, dass** die empfindlichen Elemente des ersten Musters (5) auf Grundlage eines magnetoresistiven Werkstoffs mit Tunneleffekt oder GMR, oder einer Halleffektsonde sind.

4. Montage nach Anspruch 3, **dadurch gekennzeichnet, dass** die empfindlichen Elemente des ersten Musters (5) eine Stapelung aus einer Referenzmagnetschicht, einer Trennschicht und einer empfindlichen Schicht umfassen, wobei der Widerstand zwischen den Magnetschichten von der relativen Ausrichtung ihrer Magnetisierung abhängig ist.

5. Montage nach einem der Ansprüche 1 bis 4, **dadurch gekennzeichnet, dass** der Geber (1) aus einem Magneten gebildet ist, auf dem die Magnetspuren (2, 3) ausgeführt sind.

6. Montage nach einem der Ansprüche 1 bis 5, **dadurch gekennzeichnet, dass** sich die Spuren (2, 3) über 360° oder über einen Abschnitt einer Umdrehung erstrecken, um die Winkelposition über eine Umdrehung oder über den Abschnitt zu bestimmen.

7. Montage nach einem der Ansprüche 1 bis 6, **dadurch gekennzeichnet, dass** der Sensor (4) eine Elektronikkarte (8) umfasst, die zwei Seiten (8a, 8b) aufweist, auf denen jeweils ein Muster (5) angeordnet ist.

8. Montage nach einem der Ansprüche 1 bis 7, **dadurch gekennzeichnet, dass** jedes Muster (5) derart angeordnet ist, dass sich die empfindlichen Elemente über eine allgemeine Ebene (P) erstrecken, die senkrecht zu einer Leseoberfläche (S) der zu erkennenden Spur (2, 3) ist.

## Claims

1. Assembly on a member of a system for determining the position of said member, said assembly comprising:
- said member;
- said system for determining the position of said member, said system comprising:
- an encoder (1) secured in rotation to said member, said encoder comprising a primary magnetic track (2) and a secondary magnetic track (3) which are each suitable for emitting a periodic magnetic signal representative of the movement of said encoder; and
- a sensor (4) having two patterns (5) of sensitive elements which are suitable for detecting the signals supplied by the tracks (2, 3) of the encoder (1), each pattern (5) being arranged at reading distance from a track (2, 3) to form a representative signal of the position of said track, said sensor further comprising a device (6) for processing the signals from the patterns (5) to determine the position of the member;
said assembly being **characterised in that** the sensitive elements of a first pattern (5) are based on a Hall effect probe or a magnetoresistive material wherein the resistance varies according to the magnetic signal of the track (2, 3) to be detected, said material being of a different nature from that of the sensitive elements of a second pattern (5) in respect of the technology for detecting the magnetic signal supplied by the track (3,2) to be detected, said first pattern being arranged at reading distance from a second track (3) having 2N-1 magnetic pole pairs, the sensitive elements of the second pattern (5) being based on an anisotropic magnetoresistive material, said second pattern being arranged at reading distance from a primary track (2) having N magnetic pole pairs.

2. Assembly according to claim 1, **characterised in that** the sensitive elements of the second pattern (5) are based on an AMR type magnetoresistive material.

3. Assembly according to claim 1 or 2, **characterised in that** the sensitive elements of the first pattern (5) are based on a tunnel-effect magnetoresistive material, or GMR, or a Hall effect probe.

4. Assembly according to claim 3, **characterised in that** the sensitive elements of the first pattern (5) comprise a stack of a reference magnetic layer, a separating layer and a sensitive layer, the resistance between the magnetic layers being dependent on the relative orientation of the magnetisation thereof.

5. Assembly according to any one of claims 1 to 4, **characterised in that** the encoder (1) is formed from a magnet whereon the multipolar magnetic tracks (2, 3) are embodied.

6. Assembly according to any one of claims 1 to 5, **characterised in that** the tracks (2, 3) extend over 360° or over a portion of a revolution to determine the angular position over the revolution or over said portion.

7. Assembly according to any one of claims 1 to 6, **characterised in that** the sensor (4) comprises an electronic board (8) having two faces (8a, 8b) whereon respectively a pattern (5) is arranged.

8. Assembly according to any one of claims 1 to 7, **characterised in that** each pattern (5) is arranged such that the sensitive elements extend in a general plane (P) which is perpendicular to a reading surface (S) of the track (2, 3) to be detected.
